# EUROPEAN PATENT APPLICATION

(11) **EP 3 582 458 A1**
(43) Date of publication of application: **18.12.2019**
(21) Application number: 17896106.6
(22) Date of filing: 16.11.2017
(51) Int. Cl.: H04L 12/803, H04L 12/28

(54) **COMMUNICATION SYSTEM, COMMUNICATION DEVICE, AND COMMUNICATION METHOD**

(30) Priority: 09.02.2017 JP 2017022076
(71) Applicant: Omron Corporation, Kyoto-shi, Kyoto 600-8530 (JP)
(72) Inventor: YONEDA, Mitsuhiro, Kyoto-shi Kyoto 600-8530 (JP); NIIMI, Taiga, Kyoto-shi Kyoto 600-8530 (JP); SAWADA, Hiroshi, Kyoto-shi Kyoto 600-8530 (JP); SAKATANI, Nobuyuki, Kyoto-shi Kyoto 600-8530 (JP); KITAGUCHI, Tatsuya, Kyoto-shi Kyoto 600-8530 (JP)
(74) Representative: Horn Kleimann Waitzhofer Patentanwälte PartG mbB
(86) International application number: PCT/JP2017/041296
(87) International publication number: WO 2018/146892

(57) **Abstract**

A communication system includes first transmission means for transmitting first data to be used for control of a manufacturing apparatus or a production facility every predetermined cycle and second transmission means for transmitting, during a period in which the first data is not being transmitted, second data which should be delivered to a destination within a designated time period. The second transmission means includes determination means for determining whether or not the second data can be delivered to the destination through a first transmission path over a network within the designated time period and path changing means for changing, when it is determined that the second data cannot be delivered to the destination within the designated time period, a path to transmit at least a part of the second data to the destination through a second transmission path different from the first transmission path over the network.

## Description

### TECHNICAL FIELD

The present invention relates to a communication system in which a plurality of communication apparatuses are connected to a redundant network, a communication apparatus directed to the communication system, and a communication method directed to the communication system.

### BACKGROUND ART

With recent development of information and communication technology (ICT), such a system that everything from manufacturing equipment at a site to a higher-order management apparatus is integrally networked has been on the way of implementation also for production lines.

Requirements in accordance with applications and purposes are imposed on data transmitted in such a networked system. For example, though a size of data used for control of a manufacturing apparatus, a production facility, or the like (control-oriented data) is not so large, the data is required to be real-time. In contrast, though data handled by a higher-order management apparatus (information-oriented data) is not required to be real-time, data of a relatively large size should be transmitted. There are background art documents as below which relate to presence of both of control-oriented data and information-oriented data over a network.

Japanese Patent Laying-Open No. 2013-157752 (PTL 1) discloses a network system in which a plurality of types of networks different in protocol such as a control-oriented network (field network) which connects a PLC and a slave apparatus to each other, Backplane Bus which directly connects equipment through an internal bus, and an information-oriented network which connects a PLC and a higher-order computer to each other are present as being mixed.

Japanese Patent Laying-Open No. 2015-022416 (PTL 2) presents a problem of a large amount of various information obtained from field equipment together with information obtained by its basic function when the field equipment is digitized and becomes more intelligent. In order to address such a problem, the field equipment disclosed in PTL 2 includes a communication unit which communicates with a control device through a first communication path and includes a local communication unit which communicates with another piece of field equipment through a second communication path different from the first communication path.

### CITATION LIST

### PATENT LITERATURE

PTL 1: Japanese Patent Laying-Open No. 2013-157752
PTL 2: Japanese Patent Laying-Open No. 2015-022416

### SUMMARY OF INVENTION

### TECHNICAL PROBLEM

Control-oriented data as described above often requires to strictly be in real-time, whereas information-oriented data requires a relatively large transmission capacity (communication band). It is not easy to satisfy such contradictory requirements over an identical network.

PTL 1 described above discloses a configuration in which a plurality of pieces of data different in protocol are incorporated in an identical frame. With this method, however, requirements for a transmission rate or a transmission capacity for each characteristic of data (for example, distinction between control-oriented data and information-oriented data as described above) cannot be met, and both of control-oriented data and information-oriented data are transmitted over signals at a common transmission rate or a common transmission capacity.

PTL 2 discloses a configuration in which each piece of field equipment can use a plurality of communication paths (wired and wireless), however, the configuration which supports a plurality of communication paths suffers from complicated processing. For example, while wireless communication from one piece of equipment to another piece of equipment is established, wired communication from that another piece of equipment to a master should be established. In each of wireless communication and wired communication, processing load in a responsible piece of equipment is also heavy.

As set forth above, it is not easy to transmit control-oriented data and information-oriented data over an identical network while requirements for each of them are satisfied. Optimal integration of control-oriented communication and information-oriented communication for developing more intelligent control equipment has been desired.

### SOLUTION TO PROBLEM

According to one embodiment of the present invention, a communication system in which a plurality of communication apparatuses are connected to a redundant network is provided. The communication system includes first transmission means for transmitting first data to be used for control of a manufacturing apparatus or a production facility every predetermined cycle and second transmission means for transmitting, during a period in which the first data is not being transmitted, second data which should be delivered to a destination within a designated time period. The second transmission means includes determination means for determining whether or not the second data can be delivered to the destination through a first transmission path over the network within the designated time period and path changing means for changing, when it is determined that the second data cannot be delivered to the destination within the designated time period, a path to transmit at least a part of the second data to the destination through a second transmission path different from the first transmission path over the network.

Preferably, the determination means determines whether or not the second data can be delivered to the destination within the designated time period based on a line utilization rate involved with transmission of the first data over the network.

Preferably, the determination means obtains the line utilization rate from a communication apparatus different from a sender communication apparatus located on the first transmission path.

Preferably, the path changing means selects the second transmission path under a predetermined rule for the network.

Preferably, the second transmission means further includes rule changing means for changing the predetermined rule for the network based on a record of switching of the transmission path.

Preferably, the communication system further includes third transmission means for transmitting third data different from the first data and the second data.

Preferably, the third transmission means changes, in transmission of the third data to the destination through a third transmission path over the network, a path to transmit the third data to the destination through a fourth transmission path different from the third transmission path over the network, based on a line utilization rate involved with transmission of the third data over the network.

Preferably, the path changing means allows transmission of the second data to the destination through both of the first transmission path and the second transmission path.

A communication apparatus according to another embodiment of the present invention includes an interface for connection to a redundant network, first transmission means for transmitting first data to be used for control of a manufacturing apparatus or a production facility every predetermined cycle, and second transmission means for transmitting, during a period in which the first data is not being transmitted, second data which should be delivered to a destination within a designated time period. The second transmission means includes determination means for determining whether or not the second data can be delivered to the destination through a first transmission path over the network within the designated time period and path changing means for changing, when it is determined that the second data cannot be delivered to the destination within the designated time period, a path to transmit at least a part of the second data to the destination through a second transmission path different from the first transmission path over the network.

According to another embodiment of the present invention, a method of communication over a redundant network to which a plurality of communication apparatuses are connected is provided. The method includes a first transmission step of transmitting first data to be used for control of a manufacturing apparatus or a production facility every predetermined cycle and a second transmission step of transmitting, during a period in which the first data is not being transmitted, second data which should be delivered to a destination within a designated time period. The second transmission step includes a determination step of determining whether or not the second data can be delivered to the destination through a first transmission path over the network within the designated time period and a path changing step of changing, when it is determined that the second data cannot be delivered to the destination within the designated time period, a path to transmit at least a part of the second data to the destination through a second transmission path different from the first transmission path over the network.

### ADVANTAGEOUS EFFECTS OF INVENTION

According to one embodiment of the present invention, control-oriented data and information-oriented data can be transmitted over an identical network while requirements for each of them are satisfied.

### BRIEF DESCRIPTION OF DRAWINGS

Fig. 1 is a schematic diagram showing one example of an overall configuration of a communication system according to the present embodiment.
Fig. 2 is a diagram showing a type of data transmitted in the communication system in Fig. 1.
Fig. 3 is a diagram showing one example of allocation of a communication band in a communication method according to the present embodiment.
Fig. 4 is a schematic diagram showing one example of a network configuration including a control device according to the present embodiment.
Fig. 5 is a schematic diagram showing one example of a hardware configuration of the control device including a communication apparatus according to the present embodiment.
Fig. 6 is a schematic diagram showing one example of a hardware configuration of a device including the communication apparatus according to the present embodiment.
Fig. 7 is a schematic diagram showing one example of a software configuration of the control device for performing communication processing according to the present embodiment.
Fig. 8 is a diagram illustrating one state of data transmission in a network configuration without redundant paths.
Fig. 9 is a diagram illustrating one form of dynamic selection of a transmission path in the communication method according to the present embodiment.
Fig. 10 is a diagram illustrating another state of data transmission in the network configuration without redundant paths.
Fig. 11 is a diagram illustrating another form of dynamic selection of a transmission path in the communication method according to the present embodiment.
Fig. 12 is a schematic diagram showing one example of a path setting table held in the communication apparatus according to the present embodiment.
Fig. 13 is a flowchart showing a processing procedure in the communication apparatus which functions as a master in communication processing according to the present embodiment.
Fig. 14 is a flowchart showing a processing procedure in the communication apparatus which functions as a slave in communication processing according to the present embodiment.
Fig. 15 is a schematic diagram for illustrating adjustment of timing of transmission of data in the communication apparatus which functions as the master in the communication method according to the present embodiment.
Fig. 16 is a diagram illustrating yet another state of data transmission in the network configuration without redundant paths.
Fig. 17 is a diagram illustrating still another form of dynamic selection of a transmission path in the communication method according to the present embodiment.
Fig. 18 is a flowchart showing another processing procedure in the communication apparatus which functions as the master in communication processing according to the present embodiment.

### DESCRIPTION OF EMBODIMENTS

An embodiment of the present invention will be described in detail with reference to the drawings. The same or corresponding elements in the drawings have the same reference characters allotted and description thereof will not be repeated.

### <A. Overall Configuration of Communication System>

An overall configuration of a communication system in which communication processing according to the present embodiment is adopted will initially be described.

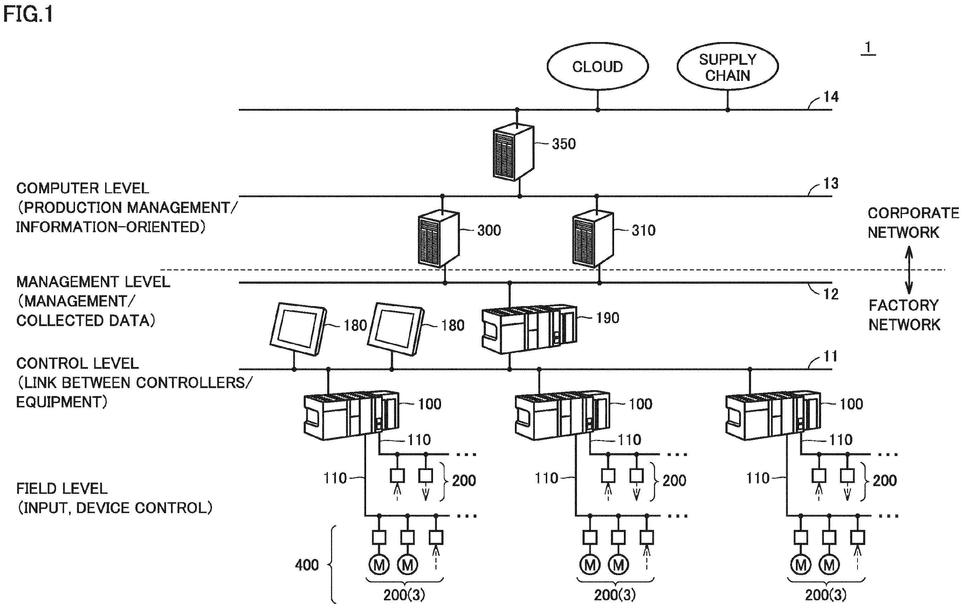

Fig. 1 is a schematic diagram showing one example of an overall configuration of a communication system 1 according to the present embodiment.

Referring to Fig. 1, in communication system 1, networks are connected to a plurality of levels and a different function is allocated to a network at each level. Specifically, four levels of networks 11 to 14 are provided.

Network 11 is a control-level network to which a control device 100 representing machine control equipment, an apparatus/line management apparatus 190 representing apparatus/line management equipment, and a display 180 which provides a supervisory control and data acquisition (SCADA) function are connected, so that a link allowing exchange of data between apparatuses is formed. Network 11 constructs a data link between a controller (control device 100) and management equipment (apparatus/line management apparatus 190 and display 180).

Various devices such as a sensor and an actuator are connected to control device 100. These devices may directly be connected with an input and output unit attached to control device 100 being interposed, or may be connected over a field network. In the configuration example shown in Fig. 1, a redundant field network 110 is provided in control device 100 and a plurality of devices 200 are connected to redundant field network 110. The plurality of devices 200 include an input device which obtains a field signal and an output device or an actuator which performs some kind of action onto a field in response to an instruction from control device 100. Therefore, a field network at a field level is further added to communication system 1 shown in Fig. 1, in addition to the four levels of networks 11 to 14. The field level provides input and device control as its main function.

Network 12 is a management-level network to which apparatus/line management apparatus 190 and display 180 as well as a manufacturing management apparatus 300 and a database apparatus 310 are connected, so that a link allowing exchange of data between apparatuses is formed. Network 12 provides exchange of management information and transmission of information on an apparatus/a line as its main function.

Network 13 is a computer-level network to which manufacturing management apparatus 300 and database apparatus 310 as well as a production management apparatus 350 which manages a production schedule are connected, so that a link allowing exchange of data between apparatuses is formed. Network 13 provides transmission of data about production management and information-oriented data as its main function.

Network 14 is an external network such as the Internet to which production management apparatus 350 and a cloud or a supply chain are connected.

In communication system 1 shown in Fig. 1, network 12 and a network at a level equal to or lower than that are also referred to as a "factory network" and provide control-oriented communication for exchanging data for actually controlling equipment (which may also collectively be referred to as "control-oriented data" below). A network at a level equal to or higher than network 13 is also referred to as a "corporate network" and provides information-oriented communication for exchanging data for monitoring, managing, and controlling production activities in a production line/a factory (which may also collectively be referred to as "information-oriented data" below).

A protocol and a framework in accordance with a difference in required characteristics are adopted for networks 11 to 14 and field network 110. For example, EtherNet/IP™ representing such an industrial open network that a control protocol is implemented on general-purpose Ethernet™ may be employed as a protocol for networks 11 and 12 belonging to the factory network. EtherCAT® representing one example of a machine control network may be adopted for a protocol for field network 110.

By adopting such a network technology suitable for machine control, such real-time ability that a time period required for transmission between pieces of equipment is guaranteed can be provided. An amount of data which can be transmitted in one communication cycle, however, is restricted.

General-purpose Ethernet® or the like is employed as a protocol for networks 13 and 14 belonging to the corporate network in order to ensure diversity of connection destinations. By adopting general-purpose Ethernet®, restriction such as an amount of data which can be transmitted is not imposed, although the real-time ability cannot be realized.

### <B. Required Communication Capability>

In the factory network shown in Fig. 1, control-oriented data as described above is basically cyclically transmitted, however, information-oriented data required by manufacturing management apparatus 300, database apparatus 310, and production management apparatus 350 included in the corporate network should also be transmitted. In the description below, all or at least one of apparatuses included in the corporate network are/is also collectively referred to as a "higher-order management system" in comparison to the factory network.

Furthermore, there is also data which requires guaranteed arrival time to some extent (for example, data on setting and management of equipment) although it is not required to have high real-time ability as in the case of control-oriented data. For the sake of convenience of description, such data is also referred to as "control/information-oriented data" below.

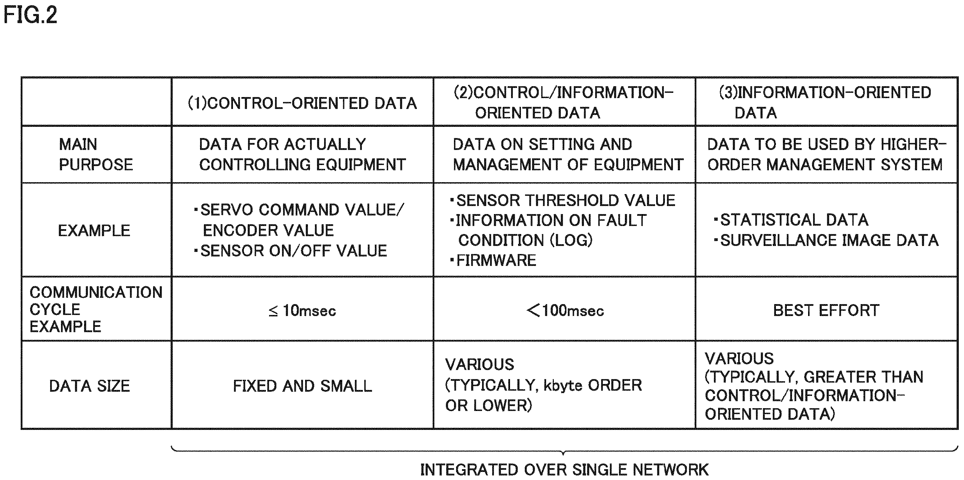

Fig. 2 is a diagram showing a type of data transmitted over communication system 1 in Fig. 1. Referring to Fig. 2, in communication system 1, mainly (1) control-oriented data, (2) control/information-oriented data, and (3) information-oriented data are transmitted. Exclusion of transmission of data categorized into none of them is not intended, and yet another type of data may be transmitted.
(1) Control-oriented data mainly includes data for actually controlling equipment. The control-oriented data corresponds to data to be used for control of a manufacturing apparatus or a production facility. Examples of the control-oriented data include a servo command value, an encoder value, and a sensor ON/OFF value. A communication cycle of such control-oriented data is preferably set to 10 msec. or shorter. This communication cycle should reliably be guaranteed. Since contents of the control-oriented data transmitted over the network are set in advance, a data size is fixed and relatively small.
(2) Control information-oriented data is categorized into information necessary for control among data used in information-oriented communication, and it mainly includes data on setting and management of equipment. The control/information-oriented data corresponds to data of which delivery to a destination within a designated time period is required. Examples of the control/information-oriented data include firmware for setting of various parameters such as a threshold value for a sensor device, collection of information on a fault condition (log) stored in each piece of equipment, and update of each piece of equipment. Though contents of control/information-oriented data transmitted over such a network are various, the data is basically data on setting and management of equipment and hence approximately several kbytes are assumed as a data size. Therefore, a communication cycle of control/information-oriented data is preferably set to be shorter than 100 msec. Though a communication cycle may relatively be long, a time of arrival of data should be guaranteed. A user may designate any arrival time, or an application or an apparatus which generates or requests data may designate arrival time under a predetermined rule.
(3) Information-oriented data is categorized into information necessary for a higher-order management system among data used in information-oriented communication, and it mainly includes data to be used by the higher-order management system. Examples of the information-oriented data include statistical data such as information collected by a sensor for a certain period and a surveillance image (a still image/a moving image) picked up under some conditions. Contents of information-oriented data transmitted over such a network are various and data sizes are also various. Typically, a data size of information-oriented data is assumed to be larger than a data size of control/information-oriented data. Since information-oriented data is not directly relevant to control of equipment, it is assumed that the information-oriented data is transmitted under the best effort scheme. In this case, importance is placed on magnitude of throughput rather than on the real-time ability (that is, arrival of data at designated time).

Categorization into any of the control-oriented data, the control/information-oriented data, and the information-oriented data may uniquely be determined for each piece of data, or even the same data may variably be categorized into any of the control-oriented data, the control/information-oriented data, and the information-oriented data depending on an application thereof. In the latter case, typically, categorization into some type is determined depending on how each piece of data is used in a layer of interest. Such categorization may be set in advance for each piece of data.

Thus, control-oriented data requires communication at a high rate and high accuracy, whereas information-oriented data requires communication of a large capacity. Control information-oriented data requires a characteristic intermediate between the control-oriented data and the information-oriented data. A communication band is allocated to such data every predetermined transmission cycle. At this time, a communication band is most preferentially allocated to control-oriented data and a remaining communication band is allocated to control/information-oriented data and information-oriented data.

The "communication band" herein means a resource for transmission of data over a network, and when data is transmitted under a time division scheme, it means a time length allocated for transmission of data. Alternatively, when data is transmitted under a frequency division scheme or a code division scheme, the communication band means a frequency or a code sequence (a logical channel) allocated for transmission of data. In the description below, an example of transmission of data under the time division scheme is assumed for the sake of convenience, and an example in which the "communication band" refers to a time length for transmission of data will be described.

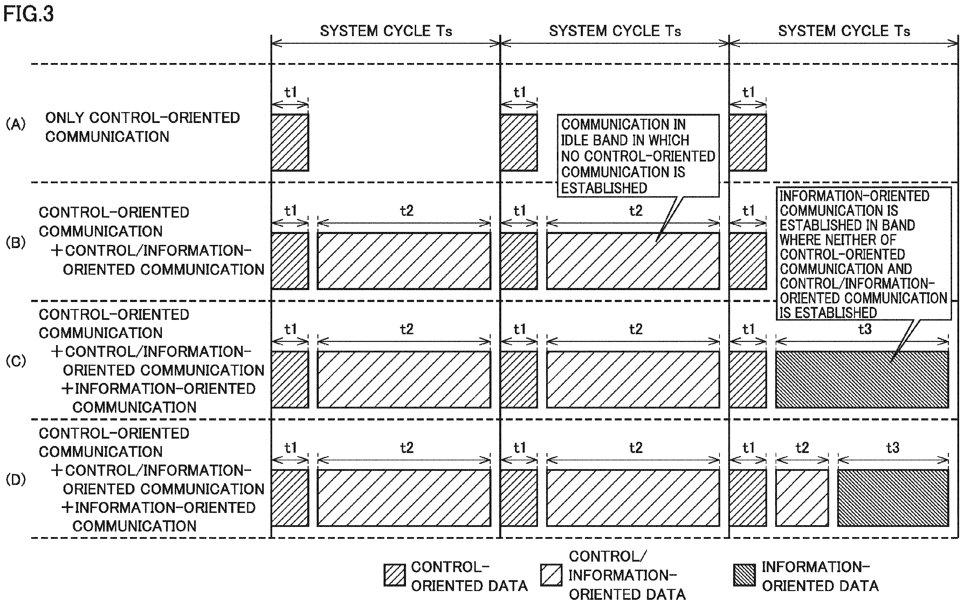

Fig. 3 is a diagram showing one example of allocation of a communication band in a communication method according to the present embodiment. Referring to Fig. 3, in communication processing according to the present embodiment, transmission and reception of control-oriented data, control/information-oriented data, and information-oriented data (which are denoted as control-oriented communication, control/information-oriented communication, and information-oriented communication, respectively) is scheduled in accordance with a predetermined system cycle Ts.

Initially, a communication band is preferentially allocated to control-oriented data. As shown in Fig. 3 (A), a processing time period t1 in system cycle Ts required for control-oriented communication is initially allocated.

Then, as shown in Fig. 3 (B), control/information-oriented communication is established as necessary in an idle band where control-oriented communication is not established. In a remaining time period in system cycle Ts with processing time period t1 required for control-oriented communication being excluded, a processing time period t2 required for control/information-oriented communication is allocated.

Control information-oriented communication does not occur in all system cycles. Therefore, as shown in Fig. 3 (C), in a remaining time period in system cycle Ts with processing time period t1 required for control-oriented communication being excluded, a processing time period t3 required for information-oriented communication may be allocated. In other words, information-oriented communication is established in a communication band in which neither of control-oriented communication and control/information-oriented communication is established.

As shown in Fig. 3 (D), all of processing time period t1 required for control-oriented communication, processing time period t2 required for control/information-oriented communication, and processing time period t3 required for information-oriented communication may be allocated within system cycle Ts.

As shown in Fig. 3 (A) to (D), the communication system according to the present embodiment and each communication apparatus connected to the communication system have a control-oriented transmission function to transmit control-oriented data to be used for control of a manufacturing apparatus or a production facility every predetermined system cycle Ts, as a first transmission function.

As shown in Fig. 3 (B) to (D), the communication system according to the present embodiment and each communication apparatus connected to the communication system have a control/information-oriented transmission function to transmit, during a period in which control-oriented data is not being transmitted, control/information-oriented data which should be delivered to a destination within a designated time period, as a second transmission function.

As shown in Fig. 3 (C) and (D), the communication system according to the present embodiment and each communication apparatus connected to the communication system have an information-oriented transmission function to transmit information-oriented data different from control-oriented data and control/information-oriented data, as a third transmission function.

Transmission of control-oriented data (control-oriented communication) may be performed by a method of sequentially transferring a frame between nodes connected to a network. Transmission of control/information-oriented data and information-oriented data (control/information-oriented communication and information-oriented communication) may be performed by a scheme of transferring a frame between specific nodes (message transmission).

Communication processing according to the present embodiment provides redundant paths over a network which allows allocation of a communication band as described above. On the premise that such redundant paths are provided, a configuration and processing for transmitting data while three types of requirements different from one another are satisfied are provided. Communication processing according to the present embodiment implements transmission in which three types of data different in required characteristics are integrated over a single network including redundant paths.

More specifically, by dynamically selecting a transmission path to be used from among redundant paths while taking into consideration a line load over the network (line utilization rate), a transmission path is optimized in accordance with three types of data characteristics while a predetermined system cycle is maintained.

The communication apparatus according to the present embodiment is not particularly limited in its form of implementation so long as it is arranged on a redundant path over which these three types of data are transmitted.

An exemplary implementation as a part of a transmission function of control device 100 or device 200 connected to network 11 is assumed and described below. Without being limited to control device 100, for example, a communication apparatus may be implemented as a part of a transmission function involved with apparatus/line management apparatus 190 or display 180 connected to network 11 or as a part of a transmission function involved with a remote input and output apparatus for networking various types of equipment on a field.

### <C. Redundancy>

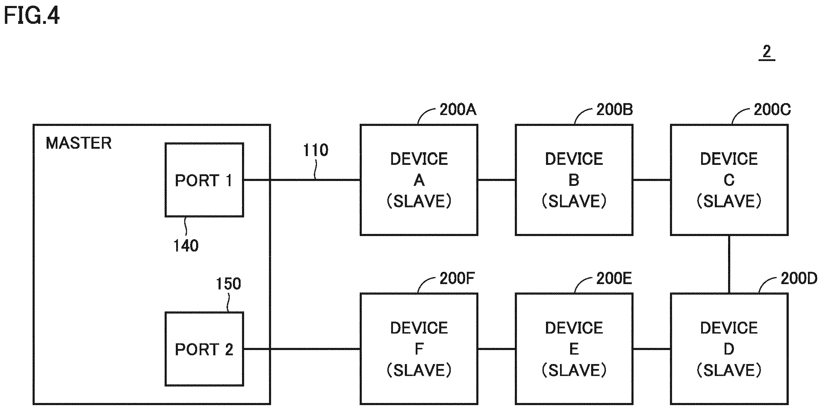

One example of a redundant network will now be described. Fig. 4 is a schematic diagram showing one example of a network configuration including control device 100 according to the present embodiment. As shown in Fig. 4, in the communication system according to the present embodiment, a configuration in which a plurality of communication apparatuses are connected to a redundant network is adopted.

An example in which control device 100 functions as the "master" and a plurality of devices 200A to 200F function as the "slaves" in a network configuration 2 shown in Fig. 4 is shown by way of example. The "master" manages timing of transmission of data to be transmitted within network configuration 2.

Control device 100 includes a plurality of field network controllers (in the example shown in Fig. 4, two field network controllers 140 and 150). A plurality of field network controllers of control device 100 function as an interface for connection to a redundant network. A field network controller may be implemented by any of a dedicated circuit directed to a specific protocol and a general-purpose circuit not limited to a specific protocol. For example, when a field network according to EtherCAT® is constructed, a general-purpose field network controller can be adopted as an apparatus which functions as the master, and a dedicated field network controller can be adopted as an apparatus which functions as a slave.

In order to distinguish field networks from each other below, the field networks may also be referred to as a "port 1" and a "port 2," respectively.

Field network 110 which makes a circuit from field network controller 140 (port 1) to field network controller 150 (port 2) is formed, and the plurality of devices 200A to 200F are connected to this circuiting path. Data can be transmitted and received between any nodes arranged over field network 110.

For example, when some data is transmitted from control device 100 to device 200C, such a path that data is sent from port 1 through device 200A and device 200B to reach device 200C is possible, and such a path that data is sent from port 2 through device 200F, device 200E, and device 200D to reach device 200C is also possible.

When some data is transmitted from device 200C to control device 100 to the contrary, such a path that data is sent from device 200C through device 200B and device 200A to reach control device 100 is possible, and such a path that data is sent from device 200C through device 200D, device 200E, and device 200F to reach control device 100 is also possible.

In such a sense, redundant paths are implemented in network configuration 2.

### <D. Hardware Configuration>

One example of a hardware configuration of control device 100 and devices included in network configuration 2 will now be described.

### (d1: Control Device 100)

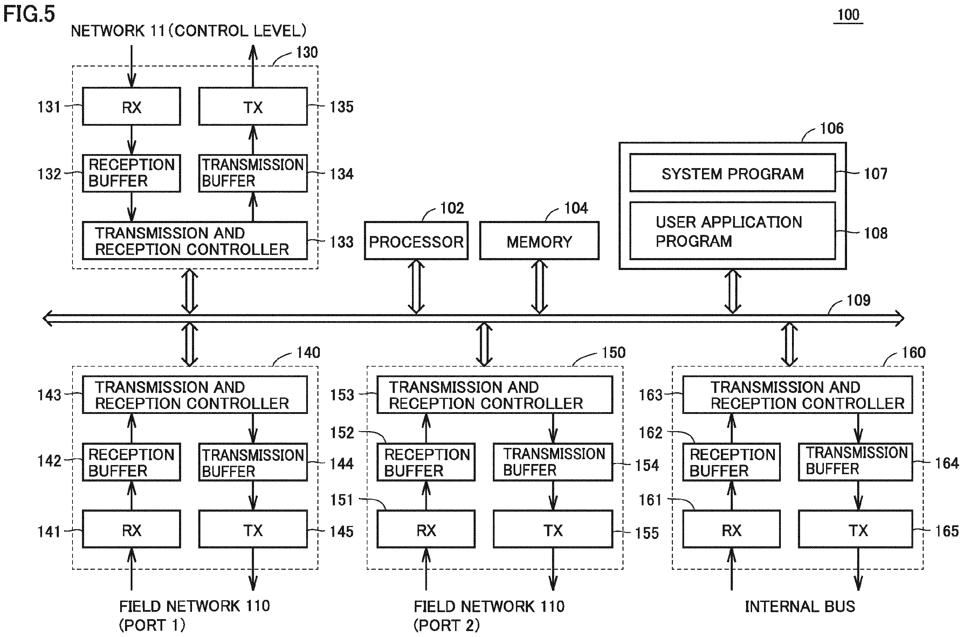

Fig. 5 is a schematic diagram showing one example of a hardware configuration of control device 100 including the communication apparatus according to the present embodiment. Control device 100 may typically be configured based on a PLC. Referring to Fig. 5, control device 100 includes as its main components, a processor 102, a memory 104, a storage 106, a network controller 130, field network controllers 140 and 150, and an internal bus controller 160.

Processor 102 performs various types of processing including processing as will be described later, by reading a system program 107 and a user application program 108 stored in storage 106 to memory 104 and executing the same. Memory 104 is implemented by a volatile storage device such as a dynamic random access memory (DRAM) or a static random access memory (SRAM). Storage 106 is implemented by a non-volatile storage device such as a hard disk or a flash memory. Storage 106 stores user application program 108 designed in accordance with an object to be controlled, in addition to system program 107 for control of each part of control device 100.

Network controller 130 provides an interface for control device 100 to exchange data with another apparatus over network 11. Network controller 130 includes as its main components, a reception circuit (RX) 131, a reception buffer 132, a transmission and reception controller 133, a transmission buffer 134, and a transmission circuit (TX) 135.

Reception circuit 131 receives a packet transmitted in constant cycles over network controller 130 and writes data stored in the received packet into reception buffer 132. Written data may be held in reception buffer 132 in a form of a queue. Transmission and reception controller 133 successively reads received packets written in reception buffer 132 and outputs only data necessary for processing in control device 100 among read data to processor 102. Transmission and reception controller 133 successively writes data or packets to be transmitted to another apparatus into transmission buffer 134 in response to a command from processor 102. Written data may be held in transmission buffer 134 in a form of a queue. Transmission circuit 135 successively sends data stored in transmission buffer 134 in accordance with cycles of transfer of packets over network controller 130.

Field network controller 140 provides an interface for control device 100 to exchange data with various devices 200 over the field network. Field network controller 140 includes as its main components, a reception circuit (RX) 141, a reception buffer 142, a transmission and reception controller 143, a transmission buffer 144, and a transmission circuit (TX) 145. Since functions of these components are the same as those of corresponding components in network controller 130, detailed description will not be repeated.

Similarly, field network controller 150 provides an interface for control device 100 to exchange data with a plurality of devices 200 over the field network. Field network controller 150 includes as its main components, a reception circuit (RX) 151, a reception buffer 152, a transmission and reception controller 153, a transmission buffer 154, and a transmission circuit (TX) 155. Since functions of these components are the same as those of corresponding components in network controller 130 and field network controller 140, detailed description will not be repeated.

In the present embodiment, redundant paths are implemented by using field network controller 140 and field network controller 150.

Internal bus controller 160 provides an interface for exchanging data through an internal bus (not shown) with an input and output unit attached to control device 100. Internal bus controller 160 includes as its main components, a reception circuit (RX) 161, a reception buffer 162, a transmission and reception controller 163, a transmission buffer 164, and a transmission circuit (TX) 165. Since functions of these components are the same as those of corresponding components in network controller 130, detailed description will not be repeated.

### (d2: Device 200)

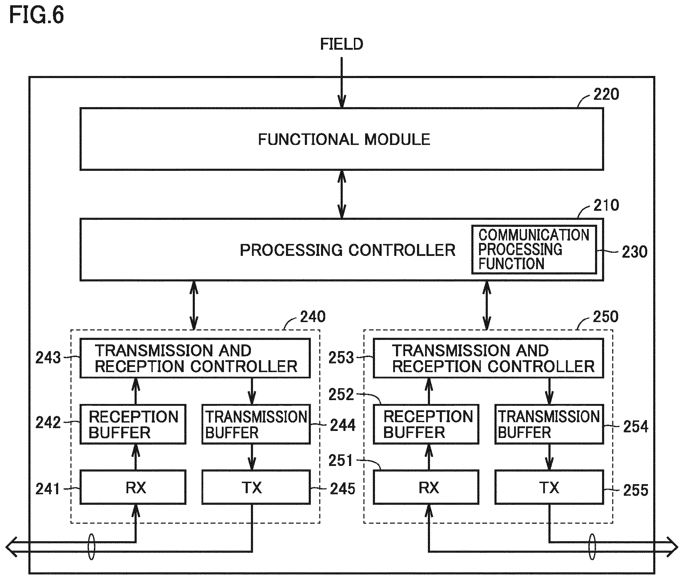

Fig. 6 is a schematic diagram showing one example of a hardware configuration of device 200 including the communication apparatus according to the present embodiment. Device 200 encompasses any communication apparatus connected to field network 110. Referring to Fig. 6, device 200 includes a processing controller 210, a functional module 220, and field network controllers 240 and 250 as main components.

Processing controller 210 has a function to manage overall processing in device 200. Processing controller 210 may be configured (software implementation) to provide a necessary function by execution of a program by the processor, or may be implemented as a hard-wired configuration (hardware implementation) such as an application specific integrated circuit (ASIC) or a field-programmable gate array (FPGA). A form of implementation as combination of hardware implementation and software implementation may be adopted. An optimal form of implementation is adopted as appropriate in accordance with an application of device 200 or required specifications.

Processing controller 210 has a communication processing function 230 for performing communication processing according to the present embodiment. Details of the communication processing according to the present embodiment and communication processing function 230 for performing the same will be described later.

Functional module 220 is a part which performs a function provided by device 200. For example, when device 200 is provided as an input/output (I/O) unit, functional module 220 includes a relay unit or an analog/digital (A/D) conversion unit. Alternatively, when device 200 is provided as a servo controller unit, functional module 220 includes a circuit which generates a command to a servo motor or a circuit which accepts feedback from the servo motor.

Field network controller 240 provides an interface for device 200 to exchange data with control device 100 or another device 200 through the field network. Field network controller 240 includes a reception circuit (RX) 241, a reception buffer 242, a transmission and reception controller 243, a transmission buffer 244, and a transmission circuit (TX) 245 as main components. Since functions of these components are similar to the functions of corresponding components of field network controller 140 shown in Fig. 5, detailed description will not be repeated.

Similarly, field network controller 250 provides an interface for device 200 to exchange data with control device 100 or another device 200 through the field network. Field network controller 250 includes a reception circuit (RX) 251, a reception buffer 252, a transmission and reception controller 253, a transmission buffer 254, and a transmission circuit (TX) 255 as main components. Since functions of these components are similar to the functions of corresponding components of field network controller 240 described above, detailed description will not be repeated.

### <E. Software Configuration>

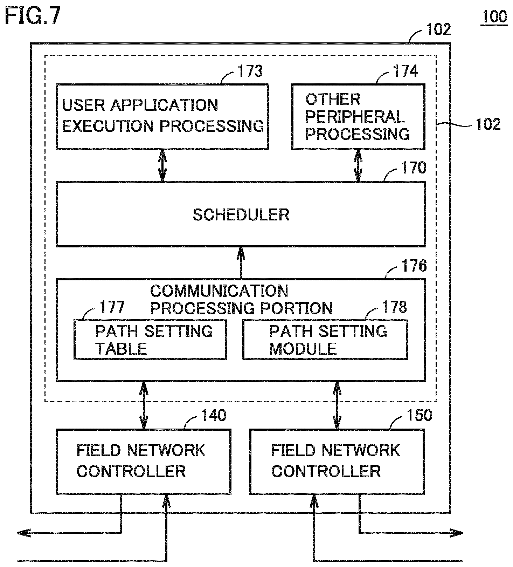

One example of a software configuration for performing communication processing (dynamic selection of a transmission path) according to the present embodiment will now be described. Fig. 7 is a schematic diagram showing one example of a software configuration of control device 100 for performing communication processing according to the present embodiment.

Referring to Fig. 7, a scheduler 170 is executed in processor 102 of control device 100. Scheduler 170 determines an order of execution or suspension of execution of a plurality of types of processing in accordance with a predetermined system cycle. More specifically, scheduler 170 allocates processing resources (a processor time resource and a memory) in accordance with predetermined priority and system cycle to user application execution processing 173, peripheral processing 174 including various types of processing, and a communication processing portion 176.

User application execution processing 173 includes processing involved with execution of user application program 108.

Communication processing portion 176 controls exchange of data between control device 100 and device 200. Specifically, communication processing portion 176 performs processing for dynamically selecting a transmission path in transmission of data to destination device 200 from among a plurality of transmission paths included in redundant paths.

Communication processing portion 176 performs processing for transmission and reception of necessary data by exchanging an internal command or data with field network controllers 140 and 150.

More specifically, communication processing portion 176 includes a path setting table 177 including information necessary for dynamically selecting a transmission path and a path setting module 178 which dynamically selects a transmission path by referring to path setting table 177. Path setting module 178 mainly performs the communication method according to the present embodiment.

Since a software configuration of device 200 is also similar to that in Fig. 7, detailed description will not be repeated. Specifically, communication processing function 230 shown in Fig. 6 is similar to the function provided by scheduler 170 and communication processing portion 176 shown in Fig. 7.

### <F: Dynamic Selection of Transmission Path>

Details of dynamic selection of a transmission path provided by the communication method according to the present embodiment will now be described.

### (f1: Overview)

Overview of the communication method according to the present embodiment will initially be described.

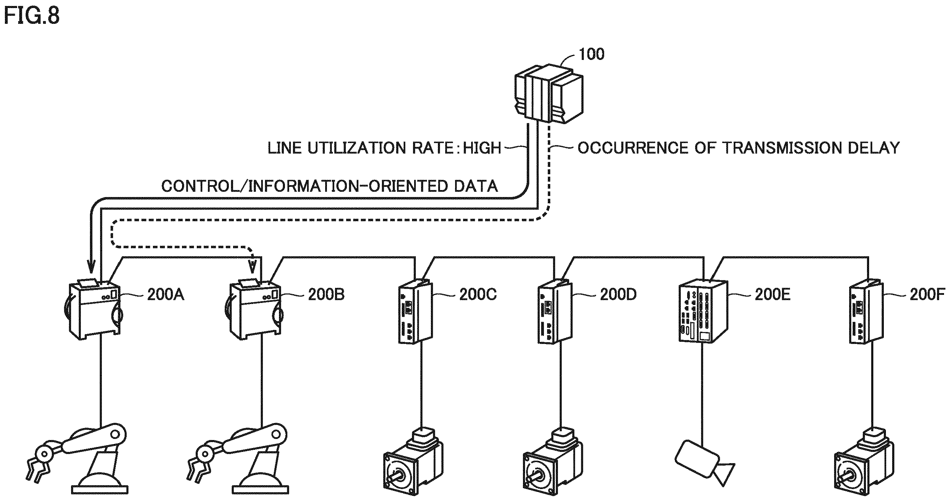

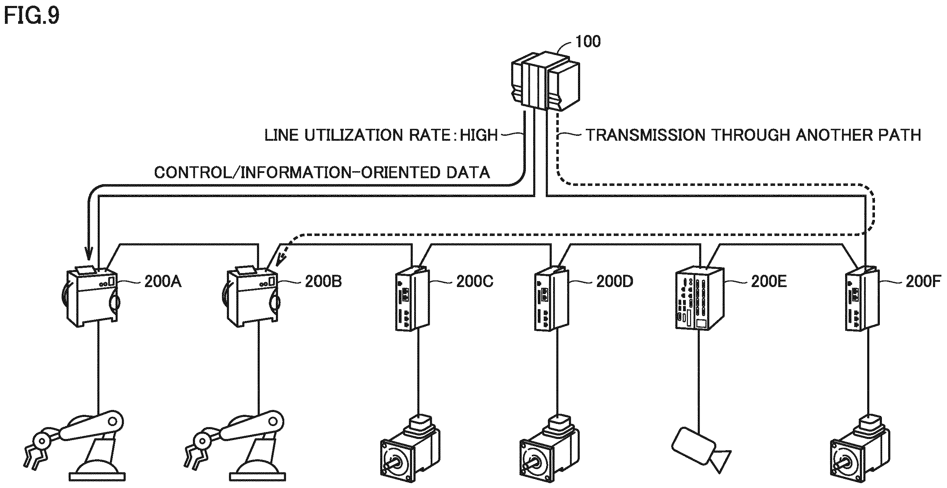

Fig. 8 is a diagram illustrating one state of data transmission in a network configuration without redundant paths. Fig. 9 is a diagram illustrating one form of dynamic selection of a transmission path in the communication method according to the present embodiment.

An example in which control/information-oriented data is transmitted from control device 100 which functions as the master to one device 200 or a plurality of devices 200 which function(s) as slave(s) is considered by way of example. As described above, time of arrival of control/information-oriented data should be guaranteed.

As shown in Fig. 8, it is assumed that, when control/information-oriented data is transmitted from control device 100 to device 200A, a data size of the control/information-oriented data is relatively large and a line utilization rate of a field network which connects control device 100 and device 200A to each other is high. It is assumed that, in such a state, a request for transmitting control/information-oriented data from control device 100 also to another device 200B has been issued. At this time, due to influence of control/information-oriented data transmitted from control device 100 to device 200A, an available line (communication band) necessary for transmitting control/information-oriented data from control device 100 to device 200B may not be secured.

In such a case, transmission delay may occur in control/information-oriented data to be transmitted from control device 100 to another destination, that is, device 200B. When transmission of control/information-oriented data is concentrated, requested time of arrival may not be guaranteed. In order to address such a problem, in the communication method according to the present embodiment, a redundant path is provided and a transmission path is dynamically selected in accordance with a line utilization rate or the like.

A general redundant configuration aims to continue communication when a device fails or when a line is disconnected, and it does not assume change in transmission path in accordance with a line utilization rate as in the communication method according to the present embodiment.

More specifically, as shown in Fig. 9, field network 110 which makes a circuit from control device 100 to devices 200A to 200F is implemented and a transmission path is selected in accordance with a line utilization rate or the like.

Fig. 9 shows an example in which a request for transmitting control/information-oriented data also to another device 200B is issued while control/information-oriented data is being transmitted from control device 100 to device 200A as in the state shown in Fig. 8. In the example shown in Fig. 9, when a high line utilization rate of a transmission path from control device 100 through device 200A to device 200B is detected, control device 100 assesses guaranteed designated time of arrival and then transmits control/information-oriented data through a transmission path from control device 100 through device 200F, device 200E, device 200D, and device 200C to device 200B.

Thus, in the present embodiment, by adopting the network configuration including redundant paths, line load is distributed and time of arrival of control/information-oriented data is reliably guaranteed. When there is no available line (communication band) due to transmission of some control/information-oriented data or information-oriented data in a specific transmission path, another transmission path is selected for transmission of data. At this time, time of arrival of control-oriented data should strictly be guaranteed and a transmission path is not changed for maintaining control accuracy. In other words, it is mainly a transmission path for control/information-oriented data that is changed. Before a transmission path is changed, guaranteed time of arrival is preferably confirmed.

A transmission path also for information-oriented data in addition to control/information-oriented data may be changed. Time of arrival of information-oriented data, however, does not have to be guaranteed but the information-oriented data is transmitted under the best effort scheme. Therefore, a transmission path does not have to be changed.

Figs. 8 and 9 described above show an example in which control/information-oriented data is transmitted from control device 100 which functions as the master to device 200 which functions as the slave. In contrast, an example in which control/information-oriented data is transmitted from device 200 which functions as the slave to control device 100 which functions as the master will be described.

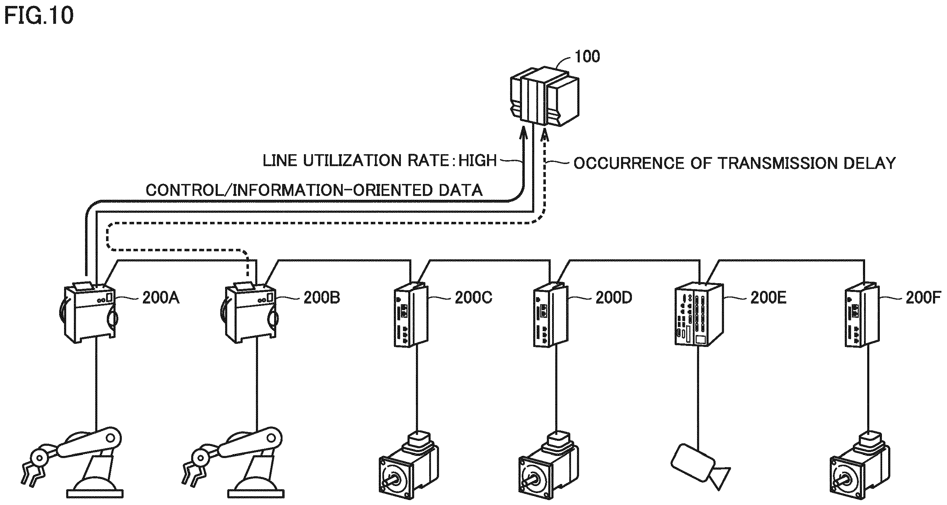

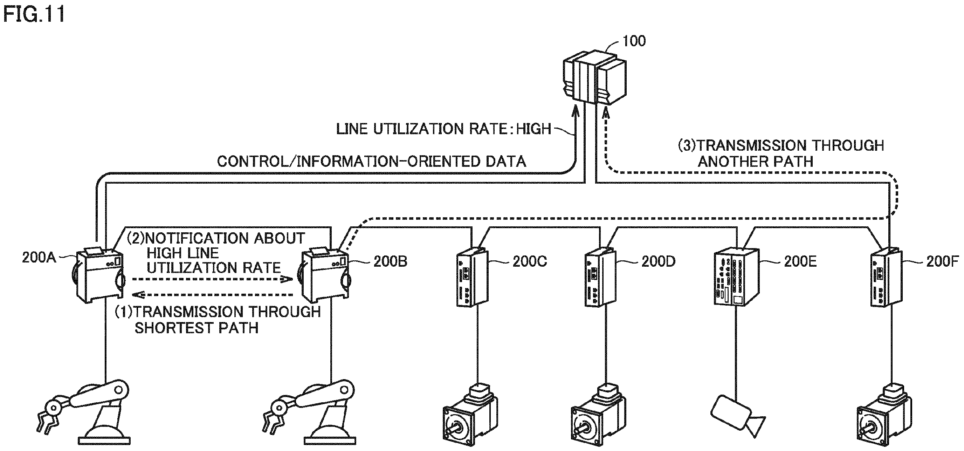

Fig. 10 is a diagram illustrating another state of data transmission in the network configuration without redundant paths. Fig. 11 is a diagram illustrating another form of dynamic selection of a transmission path in the communication method according to the present embodiment.

As shown in Fig. 10, it is assumed that, when control/information-oriented data is transmitted from device 200A to control device 100, a data size of the control/information-oriented data is relatively large and a line utilization rate of a field network which connects device 200A and control device 100 to each other is high. It is assumed that control/information-oriented data from device 200A to control device 100 is transmitted by a message rather than a cyclically transmitted frame.

It is assumed that, in such a state, a request for transmitting control/information-oriented data from another device 200B to control device 100 is issued. At this time, device 200B transmits control/information-oriented data to device 200A representing an adjacent node. Though device 200A transfers control/information-oriented data from device 200B to control device 100, due to the influence by control/information-oriented data transmitted from device 200A to control device 100, an available line (communication band) sufficient for transfer of control/information-oriented data from device 200B to control device 100 may not be secured.

In such a case, transmission delay may occur in control/information-oriented data to be transmitted from device 200B to control device 100. When transmission of control/information-oriented data is concentrated, requested time of arrival may not be guaranteed. In the communication method according to the present embodiment, even in such a case, redundant paths are provided and a transmission path is dynamically selected in accordance with a line utilization rate or the like.

More specifically, referring to Fig. 11, initially, device 200B selects a shortest transmission path which passes through device 200A, for control/information-oriented data to be transmitted to control device 100. Specifically, device 200B initially transmits control/information-oriented data of interest to device 200A ((1) transmission through shortest path). At this time, when a line utilization rate of a field network which connects device 200A and control device 100 to each other is high, device 200A notifies device 200B that the line utilization rate of the field network used as the transmission path is high ((2) notification about high line utilization rate).

Upon receiving the notification about the high line utilization rate, device 200B changes a path for transmitting control/information-oriented data of interest ((3) transmission through another path). Specifically, device 200B transmits control/information-oriented data through a path through device 200C, device 200D, device 200E, and device 200F to control device 100.

Since device 200 which functions as a slave is thus often unable to know a local line utilization rate, it dynamically selects a transmission path in cooperation with another device 200.

As described with reference to Figs. 8 to 11, at least a control/information-oriented data transmission function has a function to selectively switch among a plurality of transmission paths in a redundant network. Specifically, the control/information-oriented data transmission function includes a determination function to determine whether or not control/information-oriented data can be delivered to a destination through one transmission path over a network within a designated time period and a path changing function to change, when it is determined that control/information-oriented data cannot be delivered to the destination within the designated time period, a path to transmit at least a part of control/information-oriented data to the destination through another transmission path different from the previously selected transmission path over the network. By dynamically switching a transmission path for control/information-oriented data, time of arrival required of the control/information-oriented data can be guaranteed.

The function to dynamically switch a transmission path as described above may be performed also for an information-oriented data transmission function.

Specifically, the information-oriented data transmission function may change, in transmitting information-oriented data to a destination through a certain transmission path over the redundant network, a path to transmit at least a part of information-oriented data to the destination through another transmission path different from a previously selected transmission path over the redundant network based on line load (line utilization rate) over the network involved with transmission of information-oriented data over the redundant network. By dynamically switching a transmission path for such information-oriented data, a time period required for transmission of the information-oriented data can be shortened and time of arrival of control-oriented data and control/information-oriented data can also more readily be guaranteed.

### (f2: Path Setting Table)

Dynamic selection of a transmission path as shown in Figs. 9 and 11 described above is made based on information defined in path setting table 177 (Fig. 7). One example of path setting table 177 will be described below. Path setting table 177 defines a predetermined rule for a network of interest.

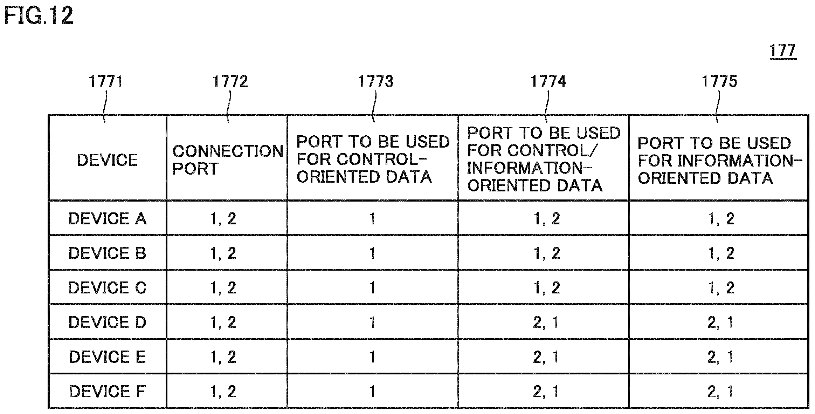

Fig. 12 is a schematic diagram showing one example of path setting table 177 held in the communication apparatus according to the present embodiment. Path setting table 177 shown in Fig. 12 corresponds to network configuration 2 shown in Fig. 4. Referring to Fig. 12, path setting table 177 sets for each device, a connection port and priority of ports for each data type.

Path setting table 177 includes a device field 1771, a connection port field 1772, a field 1773 of a port to be used for control-oriented data, a field 1774 of a port to be used for control/information-oriented data, and a field 1775 of a port to be used for information-oriented data.

In device field 1771, all devices accessible from each communication apparatus are defined. In connection port field 1772, a port accessible to each device among ports of the communication apparatus is defined. In network configuration 2 shown in Fig. 4, both of two ports 1 and 2 of control device 100 can access any device 200. Therefore, "1" and "2" are defined in connection port field 1772.

In field 1773 of port to be used for control-oriented data, a port to be used for transmission of control-oriented data is defined. Since time of arrival of control-oriented data should strictly be guaranteed, a port to be used is fixed. In the example shown in Fig. 12, "1" is defined for all devices in field 1773 of port to be used for control-oriented data.

In field 1774 of port to be used for control/information-oriented data, a port to be used for transmission of control/information-oriented data is defined. Since a transmission path for control/information-oriented data is selected in accordance with line load (line utilization rate) over the network, a plurality of ports which can be used for selecting that transmission path are set. An order of listing of ports defined in field 1774 of port to be used for control/information-oriented data is brought in correspondence with priority in selection. In the example shown in Fig. 12, a port defined on the left side is set to be higher in priority.

In field 1775 of port to be used for information-oriented data, a port to be used for transmission of information-oriented data is defined. When a transmission path also for information-oriented data is selected in accordance with line load (line utilization rate) over the network, a plurality of ports which can be used for selecting that transmission path are set. When a transmission path for information-oriented data is not dynamically selected, a port may be fixed to a specific port. In the example shown in Fig. 12, in field 1775 of port to be used for information-oriented data, a plurality of selectable ports are defined and a port defined on the left side is set to be higher in priority.

Path setting module 178 (Fig. 7) dynamically selects a transmission path by referring to path setting table 177 as shown in Fig. 12.

Though path setting table 177 shown in Fig. 12 is assumed to be stored in the communication apparatus (control device 100) which functions as the master by way of example, path setting table 177 is stored also in each of communication apparatuses (devices 200A to 200F) which functions as each slave. In this case, a communication apparatus which functions as the master may be defined in device field 1771.

Path setting table 177 may be set in advance by a user or may automatically be set based on a state of connection of a network.

Though an example in which a port for control-oriented data is fixed to "1" (a set value in field 1773 of port to be used for control-oriented data) for all devices in path setting table 177 shown in Fig. 7 is shown, limitation thereto is not intended and a different port may be designated depending on a device. A port for control-oriented data, however, is preferably not dynamically changed in order to strictly guarantee time of arrival.

### (f3: Processing Procedure: Master)

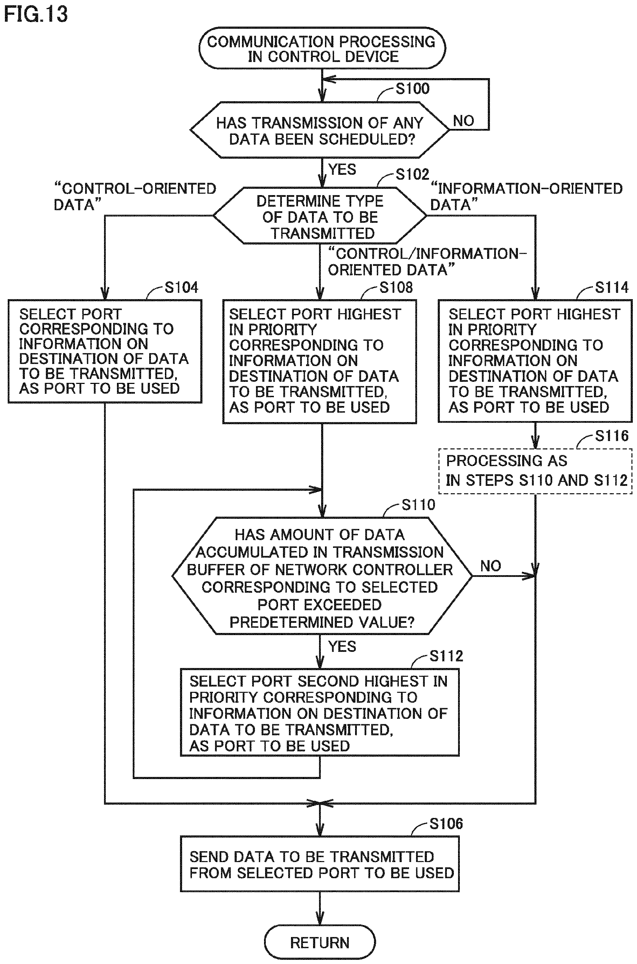

A processing procedure for performing the communication method as shown in Fig. 9 described above will now be described. Fig. 13 is a flowchart showing a processing procedure in the communication apparatus which functions as the master in communication processing according to the present embodiment. The processing procedure shown in Fig. 13 is typically repeatedly performed every system cycle by processor 102 (Fig. 5) of control device 100.

Referring to Fig. 13, control device 100 determines whether or not transmission of any data has been scheduled (step S100). When transmission of any data has not been scheduled (NO in step S 100), processing in step S100 is repeated.

When transmission of any data has been scheduled (YES in step S100), control device 100 determines a type of data to be transmitted (step S 102).

When the data type indicates control-oriented data ("control-oriented data" in step S 102), control device 100 selects as a port to be used, a port corresponding to information on a destination of data to be transmitted (typically, a device number or the like) by referring to path setting table 177 (step S 104). Then, data to be transmitted is sent from the selected port to be used (step S106). In other words, processing for transmitting control-oriented data to be used for control of a manufacturing apparatus or a production facility every predetermined cycle is performed.

When the data type indicates control/information-oriented data ("control/information-oriented data" in step S102), control device 100 selects as a port to be used, a port highest in priority corresponding to information on a destination of data to be transmitted, by referring to path setting table 177 (step S 108). Then, processing for transmitting, during a period in which no control-oriented data is being transmitted, control/information-oriented data which should be delivered to a destination within a designated time period is performed.

At this time, control device 100 assesses whether or not a transmission path corresponding to the selected port to be used should be changed based on line load (line utilization rate) over the network. Control device 100 determines whether or not control/information-oriented data of interest can be delivered to the destination within the designated time period based on the line utilization rate involved with transmission of control/information-oriented data over the network. Specifically, control device 100 determines whether or not an amount of data accumulated in the transmission buffer of the network controller corresponding to the port selected as the port to be used has exceeded a predetermined value (step S110).

When the amount of data accumulated in the transmission buffer of the corresponding network controller has exceeded the predetermined value (YES in step S110), line load (line utilization rate) of the currently selected transmission path is determined as being high and another transmission path is selected. Specifically, control device 100 selects as a port to be used, a port second highest in priority corresponding to information on the destination of the data to be transmitted, by referring to path setting table 177 (step S 112). In other words, control device 100 selects an alternative transmission path under a predetermined rule for the network defined in path setting table 177. Then, processing in step S110 is repeated.

When the amount of data accumulated in the transmission buffer of the corresponding network controller has not exceeded the predetermined value (NO in step S110), line load (line utilization rate) of the currently selected transmission path is determined as not being high, and data transmission through the selected transmission path is continued. Data to be transmitted is sent from the selected port to be used (step S106).

When the data type indicates information-oriented data ("information-oriented data" in step S 102), control device 100 selects as a port to be used, a port highest in priority corresponding to information on a destination of data to be transmitted, by referring to path setting table 177 (step S114). Then, data to be transmitted is sent from the selected port to be used (step S106). Processing for transmitting information-oriented data different from control-oriented data and control/information-oriented data is performed.

In dynamic selection of a transmission path also for information-oriented data, processing similar to that in steps S110 and S 112 may be performed (step S 116).

### (f4: Additional Processing in Master)

Though an example in which a transmission path is selected in accordance with a data type and data is transmitted in the processing procedure shown in Fig. 13 is described, contents of path setting table 177 may be updated concurrently with such data transmission.

For example, when data is steadily accumulated in a transmission buffer of a network controller corresponding to a port highest in priority and switching between selected ports (step S112 shown in Fig. 13) is frequently made, the priority may be changed among a plurality of corresponding ports in path setting table 177. For example, when switching among selected ports is successively made a prescribed number of times or more, a port highest in priority (that is, default) among a plurality of ports which can be used for a corresponding device may be changed.

Similarly, when a state of transmission through a transmission path is not good as well, contents of path setting table 177 may be updated. For example, when data is transmitted through a transmission path corresponding to a port highest in priority but data transmission is not completed due to noise received in the transmission path and a response such as a retry request is received or when a response timeout occurs as well, a port highest in priority (that is, default) among a plurality of ports which can be used for a corresponding device may similarly be changed as described above.

For example, when a retry request is successively issued a prescribed number of times or more or when a response timeout occurs successively a prescribed number of times or more, set contents of a device of interest in path setting table 177 may be changed.

Thus, in control device 100 or device 200, a function to change a predetermined rule for a network defined in path setting table 177 based on a record of switching of a transmission path may be implemented.

### (f5: Processing Procedure: Slave)

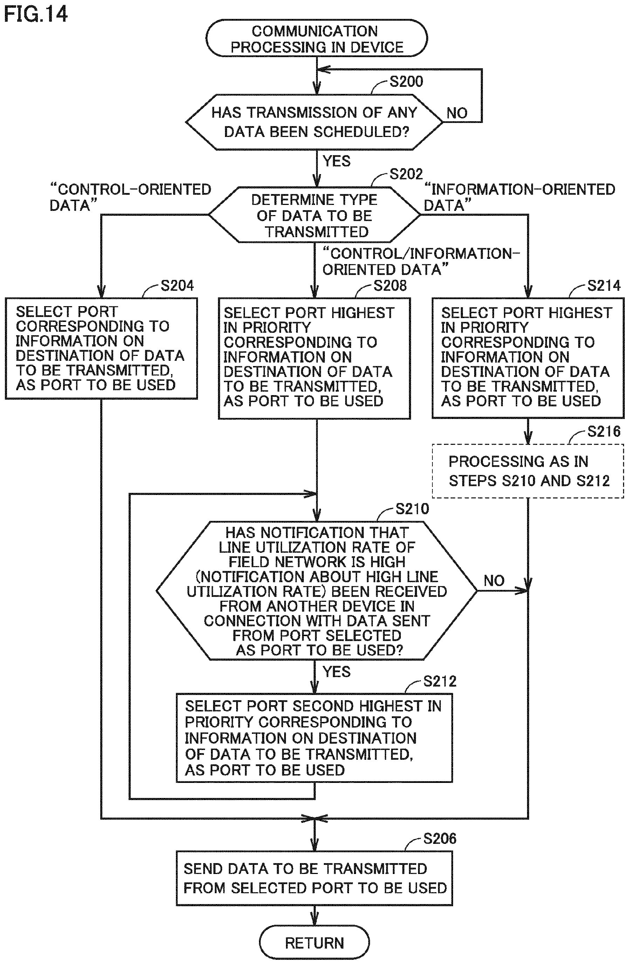

A processing procedure for performing the communication method as shown in Fig. 11 described above will now be described. Fig. 14 is a flowchart showing a processing procedure in the communication apparatus which functions as a slave in communication processing according to the present embodiment. The processing procedure shown in Fig. 14 is typically repeatedly performed every system cycle by processing controller 210 (Fig. 6) of device 200.

Referring to Fig. 14, device 200 determines whether or not transmission of any data has been scheduled (step S200). When transmission of any data has not been scheduled (NO in step S200), processing in step S200 is repeated.

When transmission of any data has been scheduled (YES in step S200), device 200 determines a type of data to be transmitted (step S202).

When the data type indicates control-oriented data ("control-oriented data" in step S202), device 200 selects as a port to be used, a port corresponding to information on a destination (typically, control device 100) of data to be transmitted, by referring to a path setting table (similar to path setting table 177 shown in Fig. 7) (step S204). Then, data to be transmitted is sent from the selected port to be used (step S206). Processing for transmitting control-oriented data to be used for control of a manufacturing apparatus or a production facility every predetermined cycle is performed.

When the data type indicates control/information-oriented data ("control/information-oriented data" in step S202), device 200 selects as a port to be used, a port highest in priority corresponding to information on a destination of data to be transmitted, by referring to the path setting table (step S208). Then, processing for transmitting, during a period in which control-oriented data is not being transmitted, control/information-oriented data which should be delivered to a destination within a designated time period is performed.

At this time, device 200 assesses whether or not a transmission path corresponding to the selected port to be used should be changed based on information from an adjacent device. Device 200 determines whether or not control/information-oriented data of interest can be delivered to the destination within the designated time period based on a line utilization rate involved with transmission of the control/information-oriented data over the network. Specifically, device 200 determines whether or not it has received a notification that a line utilization rate of a field network is high (notification about high line utilization rate) from another device, in connection with data sent from the port selected as the port to be used (step S210). Thus, device 200 determines line load over the network by obtaining a line utilization rate from a communication apparatus (another device 200 or control device 100) different from device 200 itself (that is, a sender communication apparatus) located on a previously selected transmission path.

When a notification that the line utilization rate of the field network is high has been received from another device (YES in step S210), line load (line utilization rate) of the currently selected transmission path is determined as being high and another transmission path is selected. Specifically, device 200 selects as a port to be used, a port second highest in priority corresponding to the information on the destination of the data to be transmitted, by referring to the path setting table (step S212). In other words, device 200 selects an alternative transmission path under a predetermined rule for the network defined in path setting table 177. Then, processing in step S210 is repeated.

When a notification that the line utilization rate of the field network is high has not been received from another device (NO in step S210), line load (line utilization rate) of the currently selected transmission path is determined as not being high, and data transmission through the selected transmission path is continued. Data to be transmitted is sent from the selected port to be used (step S206).

When the data type indicates information-oriented data ("information-oriented data" in step S202), device 200 selects as a port to be used, a port highest in priority corresponding to the information on the destination of the data to be transmitted, by referring to the path setting table (step S214). Then, data to be transmitted is sent from the selected port to be used (step S206). Processing for transmitting information-oriented data different from control-oriented data and control/information-oriented data is performed.

In dynamic selection of a transmission path also for information-oriented data, processing similar to that in steps S210 and S212 may be performed (step S216).

### (f6: Modification of Processing Procedure in Slave)

For making determination in step S210 in the processing procedure shown in Fig. 14 described above, when certain device 200 has to transfer data received from one adjacent device 200 to the other adjacent device 200 or control device 100 and when an amount of data accumulated in a transmission buffer of a network controller corresponding to a port to be used has exceeded a predetermined value, data sender device 200 may be notified that line load (line utilization rate) over the network is high.

Device 200 located on a path between control device 100 and any device 200 is supposed to transfer data transmitted from control device 100 or another device 200. Therefore, in each of such devices 200, both of the processing procedure in the communication apparatus which functions as the master as shown in Fig. 13 and the processing procedure in the communication apparatus which functions as the slave as shown in Fig. 14 may be implemented.

When certain device 200 has to transfer data received from one adjacent device 200 to the other adjacent device 200 or control device 100 and when an amount of data accumulated in a transmission buffer of a network controller corresponding to a port to be used has exceeded a predetermined value (that is, line load (line utilization rate) over the network is high), an order of transmission may be sorted in accordance with priority of data to be transmitted.

### (f7: Other Processing)

Though processing for determining line load (line utilization rate) over the network based on an amount of data accumulated in a transmission buffer of a network controller and selecting a port (transmission path) is exemplified in the communication method described above, alternative processing or additional processing as below may be performed.

For example, in an example in connection with control/information-oriented data where an amount of data accumulated in a transmission buffer of a network controller corresponding to a port highest in priority has exceeded a predetermined value and it is determined that change to another port (transmission path) is to be made, when it is determined that designated time of arrival cannot be guaranteed in spite of use of the changed port (transmission path), the port (transmission path) does not have to be changed. Whether or not time of arrival can be guaranteed can be determined based on a time period required for transmission of data transmitted in the past.

When it is determined that designated time of arrival cannot be guaranteed regardless of change in port (transmission path), communication processing may be aborted and an error notification or the like may be given. A method of giving an error notification includes processing for turning on an error flag, and as a result of turn-on of the error flag, processing of a fault condition can be performed by a user program. Alternatively, communication may be continued through a shortest transmission path while time of arrival that can be guaranteed is presented to a user program or the like. Furthermore, which processing is to selectively be performed in the event that it is determined that designated time of arrival cannot be guaranteed may be set in advance.

For example, when information-oriented data is accumulated in a transmission buffer of a specific port (transmission path) whereas designated time of arrival of control/information-oriented data cannot be guaranteed without using that port (transmission path), priority of the previously accumulated information-oriented data may be changed or a port (transmission path) to be used by the previously accumulated information-oriented data may be changed.

For example, when control-oriented data is about to be accumulated in a transmission buffer of a network controller but control/information-oriented data or information-oriented data has previously been accumulated in the transmission buffer, control-oriented data may be sent at the highest priority. At this time, control/information-oriented data is sent after control-oriented data. Therefore, when designated time of arrival of control/information-oriented data can be guaranteed even though it is sent after control-oriented data, control/information-oriented data of interest may be sent after control-oriented data. On the other hand, when designated time of arrival cannot be guaranteed, a port (transmission path) from which control/information-oriented data is to be sent may be changed.

When switching of a selected port is made successively a prescribed number of times or more in any of control device 100 which functions as the master and device 200 which functions as the slave, a port highest in priority (that is, default) defined in path setting table 177 may be changed. Similarly, when a state of transmission through a transmission path is not good as well, contents in path setting table 177 may be updated.

In the communication method according to the present embodiment, redundant paths are used. By using the redundant paths, however, data may be transmitted in two different directions. Since data may collide with each other due to data transmission in such different directions, processing for preventing such collision of data may be performed.

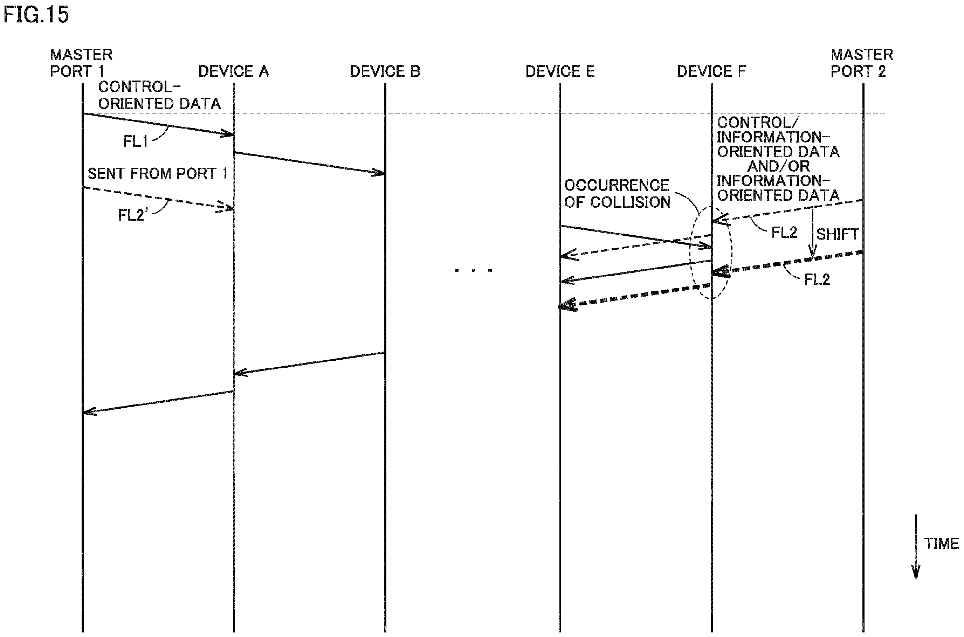

Fig. 15 is a schematic diagram for illustrating adjustment of timing of transmission of data in the communication apparatus which functions as the master in the communication method according to the present embodiment. Referring to Fig. 15, for example, it is assumed that a frame FL1 including control-oriented data is sent from port 1 of control device 100 which functions as the master and thereafter a frame FL2 including control/information-oriented data or information-oriented data is sent from port 2. Frame FL1 is transferred through all devices connected to the network and thereafter turned around in a device adjacent to port 2 (device F in the example in Fig. 15) and returns to port 1.

When frame FL2 is sent from port 2 of control device 100 while frame FL1 is being transferred as such, frame FL1 and frame FL2 may collide, for example, in device F or the like. Specifically, in device F, such a situation that, when frame FL2 arrives first and transfer of frame FL2 from device F to device E is started, transfer of frame FL1 which arrives at device F later is kept waiting may occur.

In order to avoid such collision between frames, during transfer of control-oriented data or during a certain period immediately after start of transmission of control-oriented data, a frame including control/information-oriented data or information-oriented data is preferably controlled not to be sent from another port. Fig. 15 shows an example in which timing of transmission of frame FL2 is delayed (shifted) by a prescribed time period.

Alternatively, such change to send a frame FL2' including control/information-oriented data or information-oriented data from a port the same as the port from which frame FL1 including control-oriented data was sent may be made.

Timing to send data is thus preferably adjusted to prevent collision between control-oriented data and control/information-oriented data/information-oriented data in accordance with a state of transfer of data over the network.

### (f8: Divided Transmission)

Though a processing example in which a transmission path is dynamically selected is explained in the description of the communication method above, data may be transmitted through a plurality of transmission paths by using redundant paths. Specifically, data of interest may be divided and divided data may be transmitted through different transmission paths. In the communication method described above, when it is determined that control/information-oriented data or information-oriented data cannot be delivered to a destination within a designated time period, a transmission path for the entire data is switched, however, a transmission path may be switched only for some of the data. One example of such divided transmission will be described below.

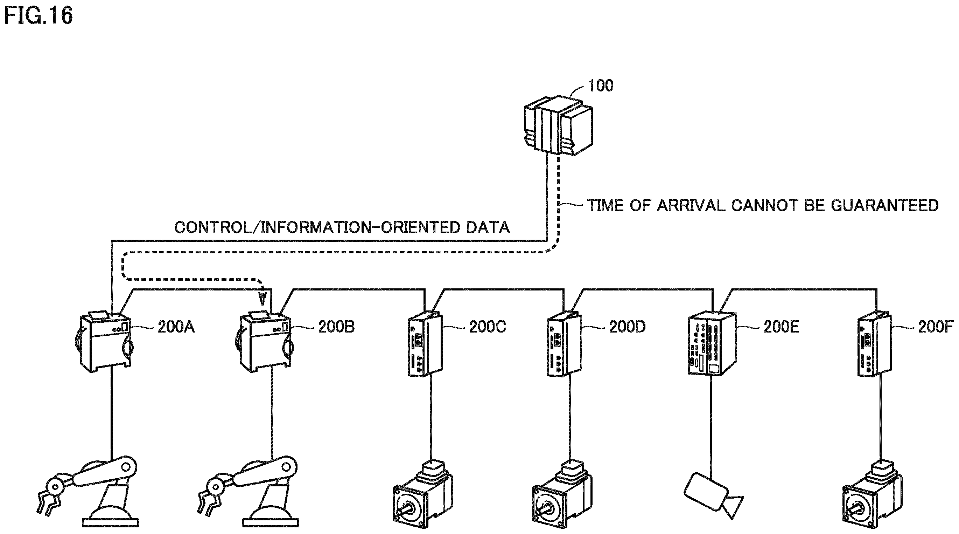

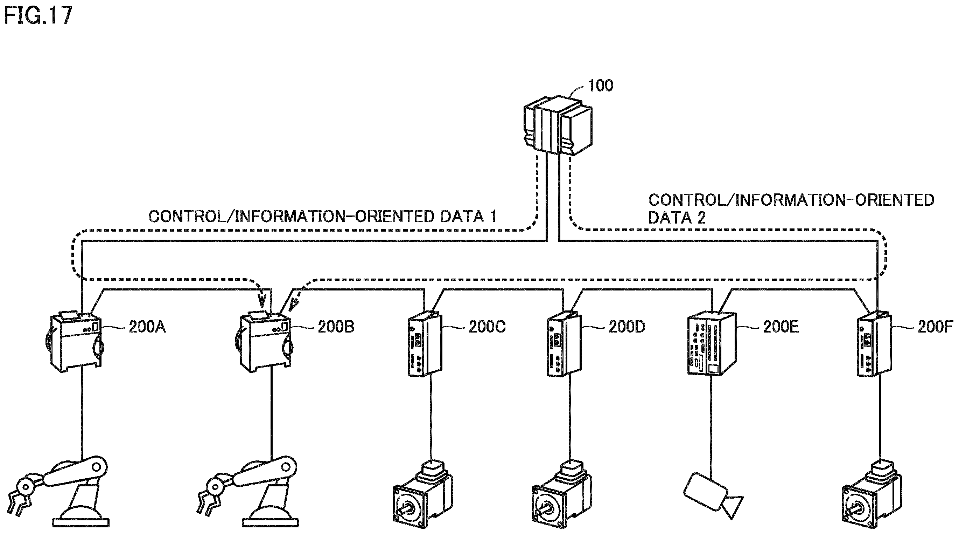

Fig. 16 is a diagram illustrating yet another state of data transmission in the network configuration without redundant paths. Fig. 17 is a diagram illustrating still another form of dynamic selection of a transmission path in the communication method according to the present embodiment.

When control/information-oriented data is transmitted from control device 100 to device 200A as shown in Fig. 16, a data size of that control/information-oriented data may relatively be large and required time of arrival may not be guaranteed. Alternatively, when restriction on time of arrival set for control/information-oriented data of interest is strict as well, the set time of arrival may not be guaranteed.

In such a case, time of arrival of control/information-oriented data may reliably be guaranteed by using redundant paths to distribute line load. Specifically, referring to Fig. 17, control/information-oriented data transmitted from control device 100 can be divided and divided data is transmitted through different transmission paths to guarantee the order of arrival so that a transmission capacity (communication band) can substantially be increased. A method such as fragmentation can be used for division of control/information-oriented data.

In order to guarantee the order of arrival, an order of transmission may be modified as appropriate at a node of reception and transmission of data. For example, when the order of arrival of data at a reception node (or a node responsible for data transfer located on a transmission path) is disorganized, the order of data may be organized at that reception node and then the data may be reconstructed. Alternatively, a transmission node (or a node responsible for data transfer located on a transmission path) may adjust transmission timing or an amount of data to be transmitted to avoid a disorganized order of arrival, based on information from the reception node or a relay node or information on availability of a communication band.

Time of arrival of control-oriented data should strictly be guaranteed and divided transmission thereof is not performed in order to maintain control accuracy. Not only control/information-oriented data but also information-oriented data may be subjected to divided transmission. Though time of arrival of information-oriented data does not have to be guaranteed, information-oriented data may be subjected to divided transmission when there is an idle communication band.

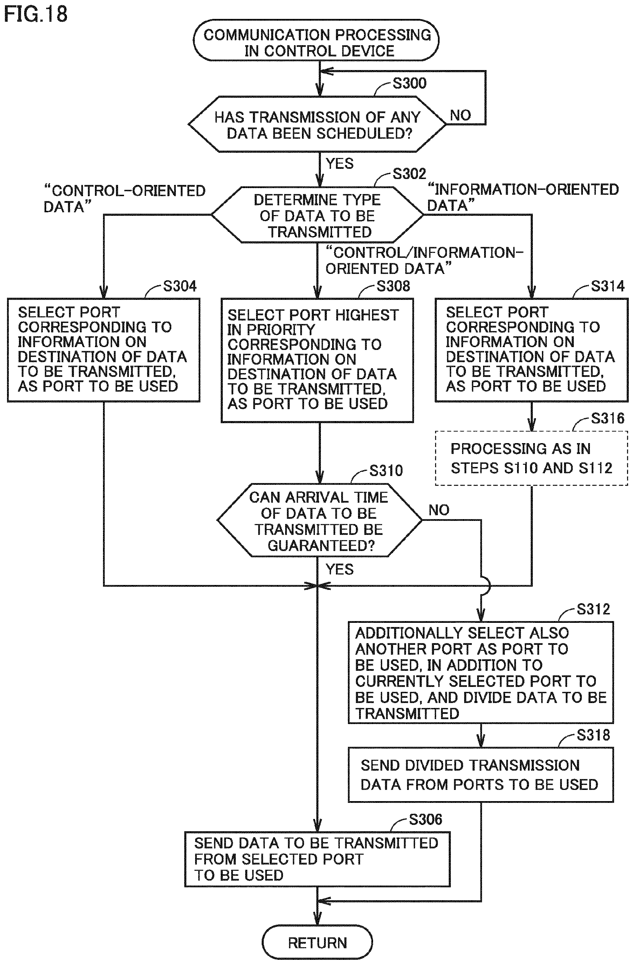

Fig. 18 is a flowchart showing another processing procedure in the communication apparatus which functions as the master in communication processing according to the present embodiment. The processing procedure shown in Fig. 18 is typically repeatedly performed every system cycle by processor 102 (Fig. 5) of control device 100.

Referring to Fig. 18, control device 100 determines whether or not transmission of any data has been scheduled (step S300). When transmission of any data has not been scheduled (NO in step S300), processing in step S300 is repeated.

When transmission of any data has been scheduled (YES in step S300), control device 100 determines a type of data to be transmitted (step S302).

When the data type indicates control-oriented data ("control-oriented data" in step S302), control device 100 selects as a port to be used, a port corresponding to information on a destination of data to be transmitted (typically, a device number or the like), by referring to path setting table 177 (step S304). Then, data to be transmitted is sent from the selected port to be used (step S306).

When the data type indicates control/information-oriented data ("control/information-oriented data" in step S302), control device 100 selects as a port to be used, a port highest in priority corresponding to information on a destination of data to be transmitted, by referring to path setting table 177 (step S308). In succession, control device 100 determines whether or not time of arrival of the data to be transmitted can be guaranteed (step S310). Specifically, control device 100 determines whether or not time of arrival can be guaranteed based on whether or not a time period of transmission secured by the time of arrival set for the data to be transmitted is equal to or smaller than a predetermined value or whether or not a data size of the data to be transmitted is equal to or greater than a predetermined value.

When time of arrival of the data to be transmitted cannot be guaranteed (NO in step S310), control device 100 additionally selects also another port as a port to be used, in addition to the currently selected port to be used, by referring to path setting table 177 and divides the data to be transmitted (step S312), and sends divided transmission data from ports to be used (step S318).

When time of arrival of the data to be transmitted can be guaranteed (YES in step S310), control device 100 sends the data to be transmitted from the selected port to be used (step S306).

When the data type indicates information-oriented data ("information-oriented data" in step S302), control device 100 selects as a port to be used, a port corresponding to information on a destination of data to be transmitted, by referring to path setting table 177 (step S314). Then, the data to be transmitted is sent from the selected port to be used (step S306).

In dynamic selection of a transmission path also for information-oriented data, processing as in steps S310, S312, and S318 may be performed (step S316).

As described above, when it is determined that control/information-oriented data or information-oriented data cannot be delivered to a destination within a designated time period, such data may be transmitted to the destination through both of an original transmission path and a new transmission path. By using a plurality of transmission paths as such, communication efficiency can further be enhanced.

### <G. Advantages>

With the communication method according to the present embodiment, a communication method with which, when a plurality of transmission paths are selectable in a redundant network, time of arrival designated in advance can be guaranteed also for control/information-oriented data while transmission of control-oriented data is most prioritized can be provided. More specifically, when transmission of control/information-oriented data through a certain selected transmission path is attempted and it is determined that designated time of arrival cannot be guaranteed through the currently selected transmission path in consideration of line load (line utilization rate) over a network, a transmission path different from the currently selected transmission path can be selected to transmit the control/information-oriented data of interest. By such dynamic selection of a transmission path, while control-oriented data of which time of arrival should strictly be guaranteed is transmitted, time of arrival designated for control/information-oriented data can be guaranteed, although restriction thereon is less severe than restriction on control-oriented data.

Not only control-oriented data for which strictly guaranteed time of arrival is required but also control/information-oriented data of which time of arrival should be guaranteed although restriction thereon is less severe can be transmitted over an identical network. In other words, both of control-oriented data and control/information-oriented data for which different requirements and data size are set can be transmitted over an identical network while requirements thereof are satisfied.

It should be understood that the embodiment disclosed herein is illustrative and non-restrictive in every respect. The scope of the present invention is defined by the terms of the claims rather than the description above and is intended to include any modifications within the scope and meaning equivalent to the terms of the claims.

### REFERENCE SIGNS LIST

1 communication system; 2 network configuration; 11, 12, 13, 14 network; 100 control device; 102 processor; 104 memory; 106 storage; 107 system program; 108 user application program; 110 field network; 130 network controller; 131, 141, 151, 161, 241, 251 reception circuit; 132, 142, 152, 162, 242, 252 reception buffer; 133, 143, 153, 163, 243, 253 transmission and reception controller; 134, 144, 154, 164, 244, 254 transmission buffer; 135, 145, 155, 165, 245, 255 transmission circuit; 140, 150, 240, 250 field network controller; 160 internal bus controller; 170 scheduler; 173 user application execution processing; 174 peripheral processing; 176 communication processing portion; 177 path setting table; 178 path setting module; 180 display; 190 line management apparatus; 200, 200A, 200B, 200C, 200D, 200E, 200F device; 210 processing controller; 220 functional module; 230 communication processing function; 300 manufacturing management apparatus; 310 database apparatus; 350 production management apparatus; 1771 device field; 1772 connection port field; 1773 field of port to be used for control-oriented data; 1774 field of port to be used for control/information-oriented data; 1775 field of port to be used for information-oriented data; FL1, FL2 frame; Ts system cycle

## Claims

1. A communication system in which a plurality of communication apparatuses are connected to a redundant network, the communication system comprising:
first transmission means for transmitting first data to be used for control of a manufacturing apparatus or a production facility every predetermined cycle; and
second transmission means for transmitting, during a period in which the first data is not being transmitted, second data which should be delivered to a destination within a designated time period,
the second transmission means including
determination means for determining whether the second data can be delivered to the destination through a first transmission path over the network within the designated time period, and
path changing means for changing, when it is determined that the second data cannot be delivered to the destination within the designated time period, a path to transmit at least a part of the second data to the destination through a second transmission path different from the first transmission path over the network.

2. The communication system according to claim 1, wherein
the determination means determines whether the second data can be delivered to the destination within the designated time period based on a line utilization rate involved with transmission of the first data over the network.

3. The communication system according to claim 2, wherein
the determination means obtains the line utilization rate from a communication apparatus different from a sender communication apparatus located on the first transmission path.

4. The communication system according to any one of claims 1 to 3, wherein
the path changing means selects the second transmission path under a predetermined rule for the network.

5. The communication system according to claim 4, wherein
the second transmission means further includes rule changing means for changing the predetermined rule for the network based on a record of switching of the transmission path.

6. The communication system according to any one of claims 1 to 5, further comprising third transmission means for transmitting third data different from the first data and the second data.

7. The communication system according to claim 6, wherein
the third transmission means changes, in transmission of the third data to the destination through a third transmission path over the network, a path to transmit the third data to the destination through a fourth transmission path different from the third transmission path over the network, based on a line utilization rate involved with transmission of the third data over the network.

8. The communication system according to claim 1, wherein
the path changing means allows transmission of the second data to the destination through both of the first transmission path and the second transmission path.

9. A communication apparatus comprising:
an interface for connection to a redundant network;
first transmission means for transmitting first data to be used for control of a manufacturing apparatus or a production facility every predetermined cycle; and
second transmission means for transmitting, during a period in which the first data is not being transmitted, second data which should be delivered to a destination within a designated time period,
the second transmission means including
determination means for determining whether the second data can be delivered to the destination through a first transmission path over the network within the designated time period, and
path changing means for changing, when it is determined that the second data cannot be delivered to the destination within the designated time period, a path to transmit at least a part of the second data to the destination through a second transmission path different from the first transmission path over the network.

10. A method of communication over a redundant network to which a plurality of communication apparatuses are connected, the method comprising:
a first transmission step of transmitting first data to be used for control of a manufacturing apparatus or a production facility every predetermined cycle; and
a second transmission step of transmitting, during a period in which the first data is not being transmitted, second data which should be delivered to a destination within a designated time period,
the second transmission step including
a determination step of determining whether the second data can be delivered to the destination through a first transmission path over the network within the designated time period, and
a path changing step of changing, when it is determined that the second data cannot be delivered to the destination within the designated time period, a path to transmit at least a part of the second data to the destination through a second transmission path different from the first transmission path over the network.
